# EUROPÄISCHE PATENTANMELDUNG

(11) **EP 3 993 189 A1**
(43) Veröffentlichungstag der Anmeldung: **04.05.2022**
(21) Anmeldenummer: 21204625.4
(22) Anmeldetag: 26.10.2021
(51) Int. Cl.: H02B 1/052

(54) **BEFESTIGUNGSVORRICHTUNG FÜR EINE BAUGRUPPE AN EINER TRAGSCHIENE**

(30) Priorität: 29.10.2020 DE 102020213607
(71) Anmelder: Kermi GmbH, 94447 Plattling (DE)
(72) Erfinder: Reisinger, Alexander, 94239 Ruhmannsfelden (DE)
(74) Vertreter: Köckeritz, Günter

(57) **Zusammenfassung**

Befestigungsvorrichtung für eine Baugruppe (2) an einer Tragschiene (3), wobei die Tragschiene (3) eine Basisleiste (3.1) zur Anlage an einen Untergrund (W) mit wenigstens einen ersten Halteschenkel (3.2) aufweist und die Baugruppe (2) wenigstens eine komplementäre erste Schenkelaufnahme (2.1) aufweist, die mit dem ersten Halteschenkel (3.2) der Tragschiene (3) in Wirkverbindung bringbar ist, zur Bildung wenigstens eines Befestigungspunktes zwischen Tragschiene (3) und Baugruppe (2), wobei wenigstens zwei Magnetkraftverbindungselemente (4, 5) zur Bildung von lösbaren Befestigungspunkten zwischen der Tragschiene (3) und der Fläche (W) vorgesehen sind, wobei die Magnetkraftverbindungselemente (4, 5) mit der Tragschiene (3) verbunden sind.

## Beschreibung

Die Erfindung betrifft eine Befestigungsvorrichtung für eine Baugruppe an einer Tragschiene, wobei die Tragschiene wenigstens einen ersten Halteschenkel und die Baugruppe wenigstens eine komplementäre erste Schenkelaufnahme aufweist, die mit dem ersten Halteschenkel der Tragschiene in eine Wirkverbindung bringbar ist, zur Bildung wenigstens eines ersten Befestigungspunktes zwischen der Tragschiene und der Baugruppe. Eine Tragschiene ist eine Profilschiene aus Metall. Tragschienen werden in der Elektrotechnik zur Befestigung von Bauteilen in Verteilerkästen, Schaltschränken, Anschlusskästen und Ähnlichem verwendet. Auf einer Tragschiene können unterschiedliche elektrische Betriebsmittel seitlich aufgeschoben oder von vorne aufgesteckt und arretiert werden. Die Montage von Schaltschränken und Schaltkästen wird durch diese genormte Methode erleichtert, wodurch die Arbeitskosten sinken.

Unter dem Begriff Tragschiene werden hier insbesondere Hutschienen verstanden, die meist in standardisierter Form vertrieben und verwendet werden. Sie weisen eine Basisleiste auf, an der wenigstens ein Halteschenkel in einer L-Form angeschlossen ist. Vorzugsweise sind an der Basisleiste jedoch zwei Halteschenkel in einer Hutform angeschlossen.

Die Hutschienen werden meist über die Basisleiste an einer vertikalen Fläche, beispielsweise einer Wand eines Schaltschrankes montiert, wobei der erste Halteschenkel derart parallel zur Wand nach oben zeigt, dass die Schenkelaufnahme der Baugruppe darin eingehängt werden kann. Selbstverständlich fallen unter die Bezeichnung Tragschiene aber auch jegliche andere Art von Tragstrukturen, die der Aufnahme der zuvor genannten Baugruppe, dienen können. Weiter können die Hutschienen auch über die Basisleiste an einer horizontalen Fläche, z.B. an der Decke oder in einem Schranksockelkasten am Boden befestigt werden. Die Position kann dabei beliebig gewählt werden, z.B. vertikal oder schräg.

Der Einfachheit halber wird jedoch nachfolgend unter einer Tragschiene eine oben beschriebene Hutschiene verstanden, die an einer vertikalen Wand montierbar ist.

Unter dem Begriff Baugruppe werden hier sämtliche Systeme, Mittel, Elemente und Vorrichtungen verstanden, die an derartigen Tragschienen anbringbar sind.

Insbesondere werden darunter elektronische Bauteile oder Betriebsmittel wie Sicherungsschalter, Überstromschutzschalter, Klemmen, Stromversorgungen, Netzteile, Relais, Stromstoßschalter, Zeitschaltuhren, Sicherungsautomaten, Reihenklemmen oder ähnliche Bauteile umfasst.

Derartige Befestigungsvorrichtungen für Baugruppen an einer Tragschiene sind aus dem Stand der Technik bereits bekannt.

Nachteilig ist bei der Montage mit herkömmlichen Hutschienen, dass nach der Montage man nicht mehr variabel ist. Die Hutschiene ist entweder im Verteilerschrank fest verschraubt oder auf C-Schienen befestigt. Sobald die elektronischen Komponenten auf die Hutschiene montiert wurden, kann man auch die Schrauben an den C-Schienen nicht mehr lösen um die Schiene zu verschieben. Vorab muss deshalb genau abgemessen werden um die Hutschiene an die korrekte Position zu schrauben. Muss man nach der Befestigung der Hutschiene diese doch an eine andere Position montieren, muss man neue Löcher bohren oder die Schrauben der C-Schienen lösen und neu positionieren. Außerdem müsste man im schlechtesten Fall nochmal alle elektrischen Komponenten demontieren.

So beschreibt die DD 1 571 32 eine Vorrichtung zur Schnellbefestigung von elektrischen Schaltgeräten auf einer Tragschiene mittels eines an einem Gehäuseboden einer Baugruppe geführten, federnd gelagerten Befestigungselementes in Form eines Klemmschiebers. Zum Festlegen der Baugruppe an der Tragschiene wird der Klemmschieber von einer Öffnungsstellung in eine Schließstellung gedrückt, wobei ein Federelement im Klemmschieber auf Vorspannung gebracht wird und so die Baugruppe an der Tragschiene fixiert.

Die DE 20 2004 019 381 U1 zeigt eine Vorrichtung zur Schnappbefestigung von Baugruppen an einer Tragschiene, wobei die Baugruppe ein Befestigungselement mit einer hakenförmigen Halterung zum Übergreifen eines Halteschenkels der Tragschiene und einem schwenkbaren Hebel zum Verbinden hinter einem weiteren Halteschenkel der Tragschiene aufweist. Dieses Befestigungselement ist dabei aus Kunststoff einstückig an einem Gehäuse der Baugruppe angeformt.

Die genannten Befestigungsvorrichtungen haben jedoch meist den Nachteil, dass sie aufgrund ihrer verschieb- oder verschwenkbaren bzw. elastischen Befestigungselemente zum einen kostenaufwendig herzustellen, zum anderen aber auch einer häufigen Montage und Demontage ohne Beschädigung nicht gewachsen sind. Gerade beim Einschnappen der zuvor genannten Befestigungselemente auf der Tragschiene kommt es häufig zu einem Versagen der elastischen Befestigungselemente und so zu einem Versagen der gesamten Befestigungsvorrichtung.

Darüber hinaus erfordern zuvor genannte Systeme meist eine bestimmte Anpresskraft bei der Montage der Baugruppen, was insbesondere bei sehr beengten Platzbedingungen und darüber hinaus insbesondere im Bereich der Elektronik meist sehr problematisch ist.

Befestigungsvorrichtungen mit verschieb- oder bewegbaren Befestigungselementen, wie z.B. dem oben genannten Klemmschieber, sind hinsichtlich ihrer Montage insbesondere bei sehr beengten Platzverhältnissen ebenfalls nachteilig, da meist der Platz zur Betätigung der Befestigungselemente fehlt. Das gilt auch für die Demontage, da meist unter großem Platzbedarf die Zugänglichkeit zu den entsprechenden Verriegelungseinrichtungen meist von mehreren Richtungen gewährleistet sein muss. Die DE 87 15 844 U1 offenbart eine Vorrichtung zur unmittelbaren Befestigung von Gehäusen mittels Haftverbindungselementen (Permanentmagneten) an einer Fläche. Dabei wird also ein ganzes Gehäuse an einer Fläche befestigt. Alternativ kann das auch mittels einer Klammer oder Schiene erfolgen. Zur Befestigung der Klammer selbst werden keine Angaben gemacht.

In der Druckschrift DE 10 2006 053 415 B3 wird die Befestigung einer Baugruppe an einer Tragschiene (Hutschiene) mittels eines ersten Befestigungspunktes in Form einer Schenkelaufnahme und einem zweiten Befestigungspunkt mittels eines Magnetkraftverbindungselementes gezeigt. Zur Befestigung der Schiene selbst werden darin aber keine Angaben gemacht.

In der DE 10 2017 112 056 A1 werden die elektrischen Module direkt mittels einer Magnethalterung an einer Schrankwand gehalten und nicht mittels einer Hutschiene. Der vorliegenden Erfindung liegt folglich die Aufgabe zu Grunde, eine Befestigungsvorrichtung der zuvor genannten Art derart weiter zu bilden, dass sie die einfachere Montage einer Baugruppe auf einer Tragschiene, insbesondere auch bei beengten Platzverhältnissen, bei gleichzeitig einfacherer Konstruktion ermöglicht. Diese Aufgabe wird durch eine Befestigungsvorrichtung gemäß Anspruch 1 gelöst. Insbesondere wird diese Aufgabe durch eine Befestigungsvorrichtung für eine Baugruppe an einer Tragschiene gelöst, wobei die Tragschiene eine Basisleiste zur Anlage an einen Untergrund oder einer Fläche mit wenigstens einem ersten Halteschenkel aufweist und die Baugruppe wenigstens eine komplementäre erste Schenkelaufnahme aufweist, die mit dem ersten Halteschenkel der Tragschiene in Wirkverbindung bringbar ist, zur Bildung wenigstens eines Befestigungspunktes zwischen der Tragschiene und der Baugruppe. Erfindungsgemäß werden dabei wenigstens zwei Magnetkraftverbindungselemente zur Bildung von lösbaren Befestigungspunkten zwischen der Tragschiene und der Fläche bzw. dem Untergrund vorgesehen. Nach einer bevorzugten Ausführungsvariante der Erfindung ist vorgesehen, dass die Basisleiste zur Anlage an einen Untergrund bzw. einer Fläche einen ersten Halteschenkel und einen zweiten Halteschenkel aufweist wobei die Baugruppe komplementäre Schenkelaufnahmen aufweist, die mit den beiden Halteschenkeln der Tragschiene in eine Wirkverbindung bringbar sind, zur Bildung eines Befestigungspunktes zwischen Tragschiene und Baugruppe. Vorteilhaft ist dabei vorgesehen, dass die Magnetkraftverbindungselemente komplementäre Tragschienenaufnahmen zur Aufnahme der Tragschiene mit der Basisleiste und dem oder den Halteschenkeln aufweist. Die Magnetkraftverbindungselemente weisen dafür sich jeweils gegenüberliegende Einschnitte auf, in welche die Enden der Tragschiene einsteckbar sind. Die Form dieser Einschnitte entspricht dabei der Querschnittskontur der jeweils eingesetzten Tragschiene. Nach einer weiteren Variante ist es möglich, dass die Einschnitte durchgehend ausgebildet sind. So könnte man auf einer langen Tragschiene beispielsweise mehr als zwei Magnetkraftverbindungselemente anbringen, um einen besseren Halt der Magnetbefestigung zu gewährleisten.

Nach einer besonderen Ausführung der Erfindung ist vorgesehen, dass der Untergrund W aus einem von einem Magneten angezogenen Material besteht.

Vorzugsweise sind die Magnetkraftverbindungselemente seitlich auf die Enden der Tragschiene aufsteckbar. Die Kontur kann dabei an jeden Schienentyp angepasst werden. Vorteilhaft ist vorgesehen, dass die Magnetstärke der Magnetkraftverbindungselemente ausreicht, um die Tragschiene in der gewünschten Position zu halten. Die Stärke der Magneten wird dabei so gewählt, dass sich die Tragschienen / Hutschienen 3 bei der Verdrahtung der elektrischen Komponenten und Anschlusskabel nicht verschieben und ausreichend in Position gehalten werden.

Nach einer anderen Variante ist vorgesehen, dass die Magnetkraftverbindungselemente nicht nur seitlich auf die Tragschiene aufgeschoben werden, sondern an einer beliebigen Position von vorne oder hinten auf die Tragschiene aufgeklipst bzw. mit dieser verbunden werden.

Ein weiterer wichtiger Vorteil der Erfindung besteht darin, dass der Abstand von der Tragschiene zum Untergrund W über die Geometrie der Magnetkraftverbindungselemente festgelegt werden kann. Es ist dadurch möglich, den freien Raum zwischen Tragschiene und W so zu wählen, dass man hier Kabel für die Verdrahtung durchführen kann. Mit den Lösungen aus dem Stand der Technik ist dies aktuell nicht möglich. Die Hutschiene liegt immer direkt an der Rückwand im Verteilerschrank an, so dass hier kein Freiraum verfügbar ist.

Im Folgenden wird die vorliegende Erfindung anhand von Ausführungsbeispielen beschrieben, die anhand der beiliegenden Zeichnungen näher erläutert werden. Hierbei zeigen:
- Fig. 1: eine Darstellung einer Ausführungsform der erfindungsgemäßen Befestigungsvorrichtung ohne Baugruppe von vorne;
- Fig. 2: eine isometrische Darstellung der Ausführungsform aus Fig. 1;
- Fig. 3: eine Darstellung einer ersten Ausführungsform der erfindungsgemäßen Befestigungsvorrichtung mit Baugruppe von vorne;
- Fig. 4: eine isometrische Darstellung der Ausführungsform aus Fig. 3;
- Fig. 5: eine isometrische Darstellung der Tragschiene mit den Magnetkraftverbindungselementen;
- Fig. 6: eine weitere isometrische Darstellung der Tragschiene mit den Magnetkraftverbindungselementen;
- Fig. 7: eine isometrische Darstellung eines Magnetkraftverbindungselementes;
- Fig. 8: Magnetkraftverbindungselemente auf welche eine Tragschiene aufsteck- bzw. aufklipsbar ist in verschiedenen Ansichten;
- Fig. 9: Verbindung der Tragschiene mit den Magnetkraftverbindungselementen über ein Langloch in verschiedenen Ansichten.

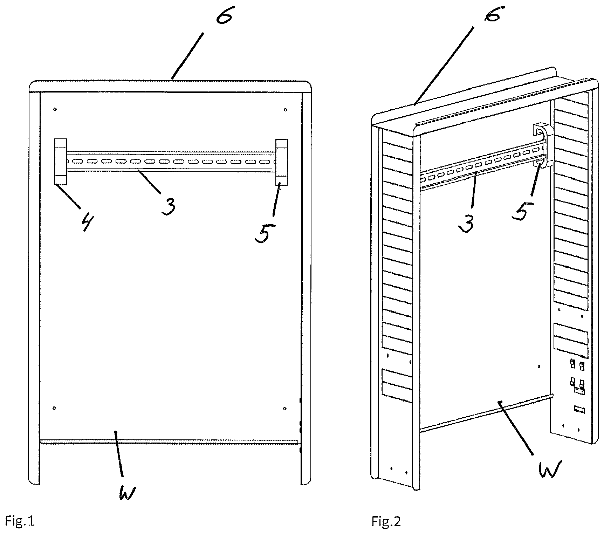

Die Fig. 1 und Fig. 2 zeigen jeweils Darstellungen einer Ausführungsform der erfindungsgemäßen Befestigungsvorrichtung ohne eine Baugruppe 2 beispielsweise einer Wand W eines Schaltschrankes 6. Dabei zeigt die Fig. 1 eine Vorderansicht und Fig. 2 eine isometrische Ansicht. Dargestellt ist die Anordnung der Tragschiene 3 mit den Magnetkraftverbindungselementen 4, 5 an einer Wand W des Schaltschrankes 6.

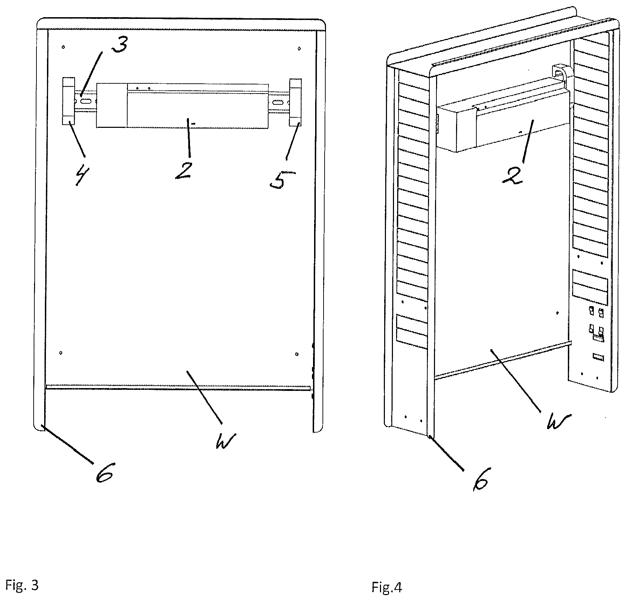

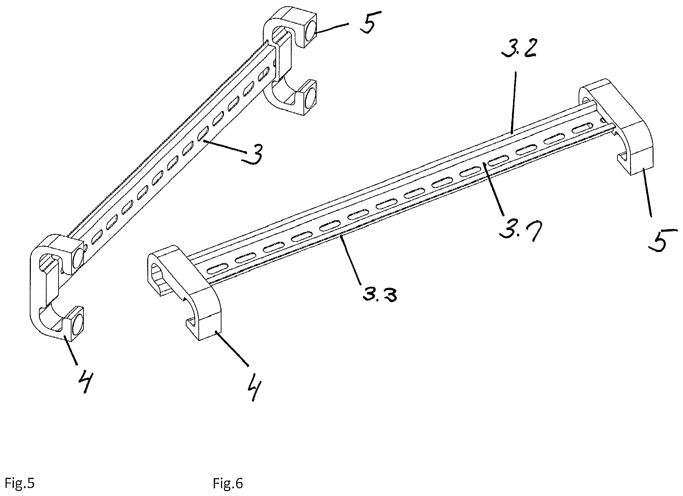

Die Fig. 3 und Fig. 4 zeigen jeweils Darstellungen einer Ausführungsform der erfindungsgemäßen Befestigungsvorrichtung mit einer Baugruppe 2 beispielsweise einer Wand W eines Schaltschrankes 6. Dabei zeigt die Fig. 3 eine Vorderansicht und Fig. 4 eine isometrische Ansicht. Dargestellt ist die Anordnung der Baugruppe 2 an der Tragschiene 3 mit den Magnetkraftverbindungselementen 4, 5 an einer Wand W des Schaltschrankes 6. In den Fig. 5 und 6 ist eine Tragschiene 3 mit den seitlich aufgesteckten Magnetkraftverbindungselementen 4, 5 dargestellt, wobei die Tragschiene 3 eine Basisleiste 3.1 vorzugsweise zur Anlage an eine vertikale Wand W aufweist mit einem ersten Halteschenkel 3.2 und einem zweiten Halteschenkel 3.3. Die Baugruppe 2 weist komplementäre Schenkelaufnahmen 2.1, 2.2 (nicht dargestellt) auf, die mit den Halteschenkeln 3.2, 3.3 der Tragschiene 3 in eine Wirkverbindung bringbar sind, zur Bildung eines Befestigungspunktes zwischen der Tragschiene 3 und Baugruppe 2. Zur Bildung von lösbaren Befestigungspunkten zwischen der Tragschiene 3 und der vertikalen Wand W sind erfindungsgemäß zwei Magnetkraftverbindungselemente 4, 5 vorgesehen. Die Befestigung ist nicht nur auf eine vertikale Wand beschränkt. Es ist weiter auch möglich, eine Montage der Magnetbefestigung / elektronischen Bauteile z.B. an der Decke oder in einem Schranksockelkasten am Boden vorzunehmen.

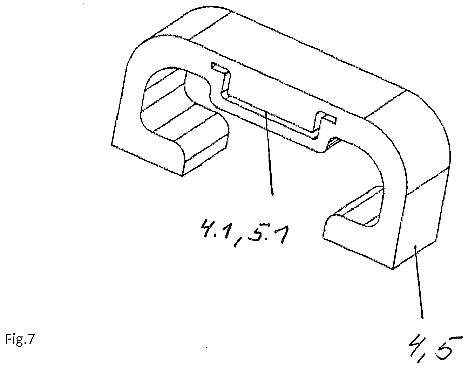

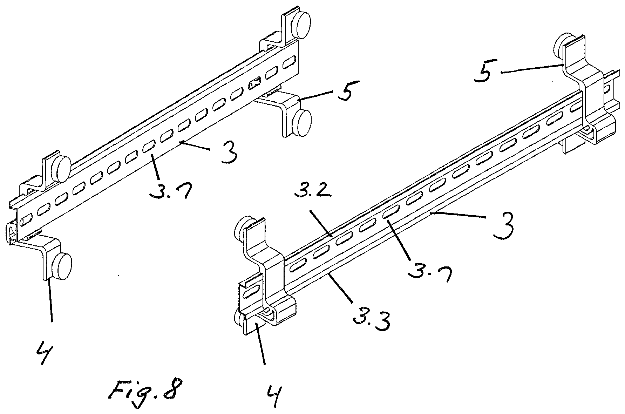

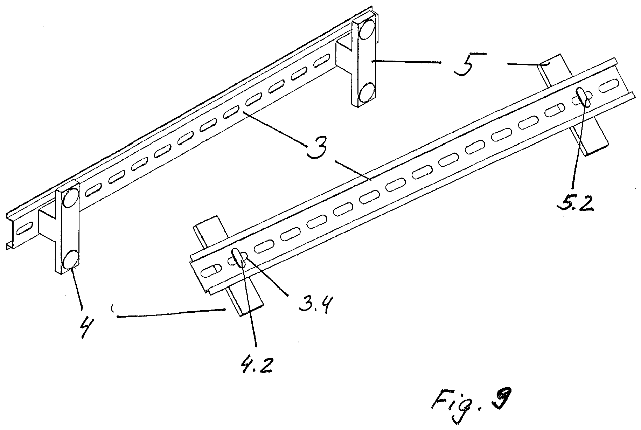

Die Baugruppe 2 ist hier exemplarisch als ein Gehäuse dargestellt und steht hier stellvertretend für sämtliche zu befestigende Baugruppen, wie Schutzschalter, Sicherungsschalter, Kupplungs- und Verzweigungsbauteile oder ähnliche elektronische oder nicht-elektronische Bauteile. Die Baugruppe 2 wird über komplementäre Schenkelaufnahmen 2.1, 2.2 (nicht dargestellt) mit den Halteschenkeln 3.2, 3.3 der Tragschiene 3 in eine Wirkverbindung gebracht, zur Bildung eines Befestigungspunktes zwischen Tragschiene 3 und Baugruppe 2. Die Tragschiene 3 selber ist hier als eine standardisierte und aus dem Stand der Technik bekannte Hutschiene ausgeführt, die eine Basisleiste 3.1 mit den Halteschenkeln 3.2, 3.3 aufweist und zur Anlage an einen Untergrund, nämlich einer vertikalen Wand W und Aufnahme der Baugruppe 2 über die komplementäre Schenkelaufnahmen 2.1, 2.2 Bauteil (nicht dargestellt) vorgesehen ist. Die hier gezeigte Ausrichtung der Hutschiene 3 entspricht der Ausrichtung bei einer Montage an einer vertikalen Wand. Auf diese Standard Tragschienen / Hutschienen 3 werden seitlich die der Befestigung dienenden Magnetkraftverbindungselemente 4, 5 aufgeschoben bzw. aufgesteckt. Fig. 7 zeigt ein derartiges Magnetkraftverbindungselement 4, 5, welches zur Aufnahme einer Tragschiene 3 ausgebildet ist. Die Querschnittskontur der Tragschiene 3 ist in die Magnetkraftverbindungselemente 4, 5 sich jeweils gegenüberliegend eingeschnitten, so dass die Magnetkraftverbindungselemente 4, 5 einfach auf die seitlichen Enden der Tragschiene 3 aufgesteckt werden können. Die Form dieser Einschnitte "e" entspricht dabei der Querschnittskontur der jeweils eingesetzten Tragschiene. Die Magnetkraftverbindungselemente 4, 5 können auch so ausgebildet sein, dass die als Hutschiene ausgebildete Tragschiene darauf aufgeklipst werden kann. Eine solche Ausbildung ist in der Fig. 8 in zwei verschiedenen isometrischen Ansichten dargestellt. Nach einer weiteren Variante der Erfindung ist vorgesehen, dass eine Verbindung der Magnetkraftverbindungselemente 4, 5 mit der Tragschiene über die üblicherweise an derartigen Tragschienen vorgesehenen Langlöcher erfolgt. Eine Variante dazu ist in der Fig. 9 in zwei verschiedenen isometrischen Ansichten dargestellt. Die Magnetkraftverbindungselemente 4, 5 weisen dazu an der der Tragschiene zugewandten Seite einen Ansatz 4.2, 5.2 auf, der in ein Langloch 3.4 der Tragschiene 3 einführbar ist. Die Halterung erfolgt nach einer Drehung der Magnetkraftverbindungselemente 4, 5 um 90°.

Diese Magnetkraftverbindungselemente 4, 5 beinhalten ausreichend starke Magneten, die die Tragschiene / Hutschiene 3 in jeder gewünschten Position halten können. Die Stärke der Magneten wird dabei so gewählt, dass sich die Tragschienen / Hutschienen 3 bei der Verdrahtung der elektrischen Komponenten und Anschlusskabel nicht verschieben und ausreichend in Position gehalten werden.

Die Vorteile der Magnetbefestigung für die Tragschiene / Hutschiene 3 bestehen darin, dass die Magnetkraftverbindungselemente 4, 5 einfach seitlich aufsteckbar sind und an jeder beliebigen Position in einem Verteilerschrank oder Schaltschrank befestigt werden können. Die Position kann in jeder beliebigen Orientierung erfolgen, beispielsweise horizontal oder vertikal.

Es können alle Bauteile, die für Tragschienen / Hutschienen geeignet sind, montiert werden. Die Höhe im Verteilerschrank (Abstand Schrankrückwand zu Tragschiene / Hutschiene) kann durch die Geometrie der aufsteckbaren Magnetkraftverbindungselemente 4, 5 festgelegt werden. Die Tragschienen / Hutschienen müssen nicht mehr festgeschraubt werden. Die Tragschienen / Hutschienen können nachträglich einfach an eine andere Position versetzt werden, ohne neue Löcher bohren zu müssen.

## Patentansprüche

1. Befestigungsvorrichtung für eine Baugruppe (2) an einer Tragschiene (3), wobei die Tragschiene (3) eine Basisleiste (3.1) zur Anlage an einen Untergrund (W) mit wenigstens einen ersten Halteschenkel (3.2) aufweist und die Baugruppe (2) wenigstens eine komplementäre erste Schenkelaufnahme (2.1) aufweist, die mit dem ersten Halteschenkel (3.2) der Tragschiene (3) in Wirkverbindung bringbar ist, zur Bildung wenigstens eines Befestigungspunktes zwischen Tragschiene (3) und Baugruppe (2), **dadurch gekennzeichnet, dass** wenigstens zwei Magnetkraftverbindungselemente (4, 5) zur Bildung von lösbaren Befestigungspunkten zwischen der Tragschiene (3) und der Fläche (W) vorgesehen sind, wobei die Magnetkraftverbindungselemente (4, 5) mit der Tragschiene (3) verbunden sind.

2. Befestigungsvorrichtung gemäß Anspruch 1, **dadurch gekennzeichnet, dass** die Basisleiste (3.1) zur Anlage an einen Untergrund (W) einen ersten Halteschenkel (3.2) und einen zweiten Halteschenkel (3.3) aufweist und die Baugruppe (2) komplementäre Schenkelaufnahmen (2.1, 2.2) aufweist, die mit den Halteschenkeln (3.2, 3.3) der Tragschiene (3) in eine Wirkverbindung bringbar sind, zur Bildung eines Befestigungspunktes zwischen Tragschiene (3) und Baugruppe (2).

3. Befestigungsvorrichtung gemäß einem der Ansprüche 1 oder 2, **dadurch gekennzeichnet, dass** die Magnetkraftverbindungselemente (4, 5) mit der Tragschiene (3) vorzugsweise durch Aufstecken, Aufschieben, Kleben, Schrauben und/oder durch Magnetkraft miteinander verbindbar sind.

4. Befestigungsvorrichtung gemäß einem der vorhergehenden Ansprüche, **dadurch gekennzeichnet, dass** die Magnetkraftverbindungselemente (4, 5) komplementäre Tragschienenaufnahmen (4.1; 5.1) zur Aufnahme der Tragschiene (3) mit der Basisleiste (3.1) und den Halteschenkeln (3.2, 3.3) aufweisen.

5. Befestigungsvorrichtung nach Anspruch 4, **dadurch gekennzeichnet, dass** die Form der Einschnitte (4.1, 5.1) in den Magnetkraftverbindungselementen (4, 5) der Querschnittskontur der Tragschiene (3) entspricht.

6. Befestigungsvorrichtung nach den Ansprüchen 4 und 5, **dadurch gekennzeichnet, dass** die Einschnitte (4.1, 5.1) in den Magnetkraftverbindungselementen (4, 5) durchgehend ausgebildet sind.

7. Befestigungsvorrichtung gemäß einem der vorhergehenden Ansprüche, **dadurch gekennzeichnet, dass** der Untergrund (W) aus einem von einem Magneten angezogenen Material besteht

8. Befestigungsvorrichtung gemäß einem der vorhergehenden Ansprüche, **dadurch gekennzeichnet, dass** die Magnetkraftverbindungselemente (4, 5) frontal mit der Tragschiene (3) verbindbar sind.

9. Befestigungsvorrichtung gemäß einem der vorhergehenden Ansprüche, **dadurch gekennzeichnet, dass** die Magnetstärke der Magnetkraftverbindungselemente (4, 5) ausreicht um die Tragschiene (3) in der gewünschten Position zu halten, wodurch ein Anschluss sowie eine Verdrahtung von elektrischen Komponenten vornehmbar ist.

10. Befestigungsvorrichtung gemäß einem der vorhergehenden Ansprüche, **dadurch gekennzeichnet, dass** der Abstand der Tragschiene (3) zum Untergrund (W) über die Geometrie der Magnetkraftverbindungselemente (4, 5) einstellbar ist, damit Anschlussleitungen und Kabel hinter der Tragschiene (3) durchführbar sind.
